# FASCICULE DE BREVET EUROPEEN

(11) **EP 0 669 882 B1**
(45) Date de publication et mention de la délivrance du brevet: **18.12.1996**
(21) Numéro de dépôt: 93924655.9
(22) Date de dépôt: 29.10.1993
(51) Int. Cl.: B60T 13/52

(54) **SERVOMOTEUR PNEUMATIQUE**
UNTERDRUCKBREMSKRAFTVERSTÄRKER
PNEUMATIC BRAKE SERVO

(30) Priorité: 26.11.1992 FR 9214206
(43) Date de publication de la demande: 06.09.1995
(73) Titulaire: ALLIEDSIGNAL EUROPE SERVICES TECHNIQUES, 93700 Drancy (FR)
(72) Inventeur: CASTEL, Philippe, F-75005 Paris (FR); MEYNIER, Guy, F-93600 Aulnay-sous-Bois (FR)
(86) Numéro de dépôt international: FR9301068
(87) Numéro de publication internationale: WO9412378

(56) Documents cités:
- EP-A- 0 347 583
- EP-A- 0 478 396
- DE-A- 3 426 964
- US-A- 4 893 691
- US-A- 5 066 077

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique une enveloppe à l'intérieur de laquelle un piston formé d'une partie tubulaire arrière supportant une jupe définit à l'aide d'une membrane déroulante une chambre avant reliée en permanence à une source de dépression et une chambre arrière reliée sélectivement à la chambre avant ou à l'atmosphère par un moyen de valve actionné par une tige de commande, susceptible de s'appuyer, par l'intermédiaire d'un plongeur, sur l'une des faces d'un disque de réaction solidaire d'une tige de poussée. Le moyen de valve comporte un clapet coopérant par une partie active avec un premier siège de valve formé sur le plongeur et un second siège de valve formé sur le piston, le clapet étant normalement sollicité vers l'avant par un moyen élastique.

De tels servomoteurs sont disposés de façon classique dans le compartiment moteur du véhicule, où la place disponible se réduit de plus en plus à mesure que les constructeurs veulent disposer de plus en plus d'accessoires, par exemple dispositifs d'antiblocage des roues, dispositifs d'antipatinage à l'accélération, systèmes d'antivol, etc..., tout en respectant l'aérodynamisme du capot moteur.

Les constructeurs ont donc tendance à vouloir intégrer différents systèmes en un seul, tout en respectant évidemment les normes de sécurité.

Il existe d'autre part diverses situations où il est désirable d'engendrer un accroissement de pression dans le circuit de freinage indépendamment de la volonté du conducteur du véhicule, comme par exemple pour empêcher les roues de patiner à l'accélération, pour faire fonction d'antivol, pour les démarrages en côte, etc...

Les systèmes connus d'antivol agissent sur divers organes de commande ou de manoeuvre du véhicule, et sont à chaque fois des éléments ajoutés dans le compartiment moteur. Certains actionnent les freins si le véhicule est occupé par un conducteur non autorisé, et sont là encore des systèmes complexes, encombrants et onéreux.

Pour apporter une aide à la conduite, les constructeurs développent également des systèmes d'aide au démarrage en côte. Ces systèmes maintiennent l'application des freins tant que la pédale d'accélérateur n'est pas actionnée. Ces systèmes viennent encore se surajouter aux précédents et présentent les mêmes inconvénients.

On connaît du document US-A-5 096 267 un servomoteur du type rappelé ci-dessus dans lequel le plongeur est formé de deux parties mobiles l'une par rapport à l'autre, le premier siège de valve étant formé sur l'une de ces parties du plongeur. L'autre partie reçoit la tige de commande et est susceptible de s'appuyer sur le disque de réaction. Un ou deux électro-aimants peuvent être commandés pour déplacer la partie portant le premier siège de valve par rapport à l'autre partie sur laquelle s'appuie la tige de commande pour assurer les fonctions d'antiblocage des roues ou d'antipatinage à l'accélération. Un ou deux ressorts de compression sont interposés entre ces deux parties.

Une telle disposition avec un siège de valve flottant présente de nombreux inconvénients. En effet, la longueur du plongeur, c'est-à-dire la distance axiale entre la face avant du plongeur destinée à coopérer avec le disque de réaction et le siège de valve formé sur le plongeur, doit être déterminée avec des tolérances très faibles si on désire maîtriser de façon précise la course morte et le temps de réponse du servomoteur ainsi que le saut de ce dernier en fonctionnement. Un montage flottant du siège de valve ne permet donc plus de maîtriser ces caractéristiques importantes du servomoteur.

On connaît également du document US-A-4 893 691, un servomoteur dans lequel la tige de commande peut être actionnée soit par la pédale de fiein, soit automatiquement par un actionneur pneumatique disposé à l'extrémité de la partie tubulaire arrière du piston et commandé en fonction des signaux fournis par divers capteurs, de façon à assurer une aide au démarrage en côte ou pour freiner le véhicule quand celui-ci est en marche arrière et qu'un obstacle se présente.

La présente invention a donc pour objet un servomoteur pneumatique d'assistance au freinage dont la course morte, le temps de réponse et le saut soient parfaitement déterminés, qui intègre des fonctions supplémentaires telles que une aide au démarrage en côte et/ou un dispositif d'antivol du véhicule, et ce d'une façon simple, fiable peu onéreuse, et conforme aux normes de sécurité.

Conformément à l'invention, ce résultat est obtenu à l'aide de moyens d'actionnement pour solliciter la partie active du clapet vers l'avant en coopération simultanée avec les premiers et second sièges de valve.

D'autres buts, caractéristiques et avantages ressortiront de la description qui suit de modes de réalisation de la présente invention donnés à titre d'exemple non limitatif en référence aux dessins annexés dans lesquels :
- La Figure 1 et une vue de côté, en coupe longitudinale, représentant la partie centrale d'un servomoteur pneumatique d'assistance au freinage de type connu ;
- La Figure 2 est une vue de côté, en demi-coupe longitudinale, représentant un premier mode de réalisation des moyens d'actionnement selon la présente invention ;
- La Figure 3 est une vue analogue à la Figure 2, représentant une variante du mode de réalisation de la Figure 2 ;
- La Figure 4 est une vue de côté, en demi-coupe longitudinale, représentant un second mode de réalisation des moyens d'actionnement selon la présente invention ; et
- La Figure 5 est une vue de côté, en demi-coupe longitudinale, représentant un troisième mode de réalisation des moyens d'actionnement selon la présente invention.

Les mêmes éléments portent les mêmes numéros de référence sur les différentes figures.

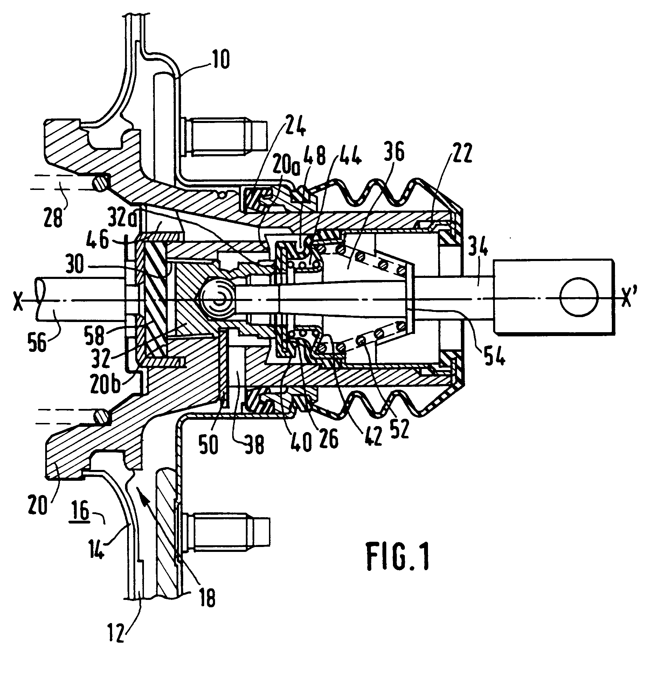

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X'. Seule la partie centrale arrière de cette enveloppe 10 est représentée sur la Figure 1.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X' du servomoteur. Ce piston creux 20 se prolonge vers l'arrière sous la forme d'une partie tubulaire 22 qui traverse de façon étanche grâce à un joint d'étanchéité annulaire armé 24 la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure 1, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X'. L'extrémité avant d'une tige de commande 34 du servomoteur, disposée également selon l'axe X-X', est montée rotulante dans le plongeur 32. L'extrémité arrière de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire monté dans la partie tubulaire du piston et possédant une partie active 40 coopérant avec deux sièges de valve annulaires 20a et 32a formés respectivement sur la partie centrale du piston 20 et sur le plongeur 32. Un insert 26 est disposé sur la face arrière de la partie active 40 pour rigidifier cette dernière et assurer sa planéité dans un plan perpendiculaire à l'axe X-X'.

La partie active 40 du clapet constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer la partie active 40 du clapet vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort de clapet 44.

Un second passage 46 est formé dans la partie centrale du piston 20, approximativement parallèlement à son axe X-X', pour faire communiquer la chambre avant 16 du servomoteur avec une chambre annulaire 48 formée autour du clapet 40, à l'intérieur de la partie tubulaire 22 du piston 20 Lorsque le plongeur 32 occupe sa position arrière de repos illustrée sur la Figure 1, dans laquelle le clapet 40 est en appui étanche sur le siège 32a du plongeur 32 et écarté du siège 20a du piston 20, les chambres avant 16 et arrière 18 du servomoteur communiquant ainsi entre elles par le passage 46, la chambre annulaire 48 et le passage 38.

D'une manière elle aussi classique, au moins un organe de butée 50 monté dans la partie centrale du piston 20 limite vers l'arrière la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur la face arrière d'une tige de poussée 56, au travers d'un disque de réaction 58 en un matériau déformable tel qu'un élastomère. De façon plus précise, la tige de poussée 56 et le disque de réaction 58 sont disposés selon l'axe X-X' du servomoteur, dans le prolongement de la tige de commande 34 et du plongeur 32.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 52 diminué de l'effort de précontrainte du ressort 44. Au cours de ce léger déplacement de la tige de commande 34 et du plongeur 32, le clapet 40, sous l'action du ressort 44, suit le siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur, isolée de la chambre avant 16, entre en communication avec l'atmosphère. La chambre avant 16 étant toujours reliée à une source de vide, une différence de pressions s'établit donc sur les deux faces de l'ensemble jupe 14 - membrane 12 qui engendre la force d'assistance désirée sur la tige de poussée 56.

Lorsque le conducteur du véhicule désire modérer ou cesser l'action de freinage, il relâche son effort sur la pédale de frein, et le ressort 52 rappelle la tige de commande 34 vers l'arrière. La tige 34 ramène à son tour le plongeur 32 vers l'arrière, le siège de valve 32a vient au contact du clapet 40, interrompant ainsi la communication entre la chambre arrière 18 et l'atmosphère et ramenant le clapet 40 vers l'arrière. Le clapet 40 perd alors le contact avec le siège de valve 20a et ouvre la communication entre les deux chambres 16 et 18. Les pressions dans les chambres avant et arrière s'équilibrent donc et le ressort 28 ramène le piston 20 et la jupe 14 vers leur position de repos.

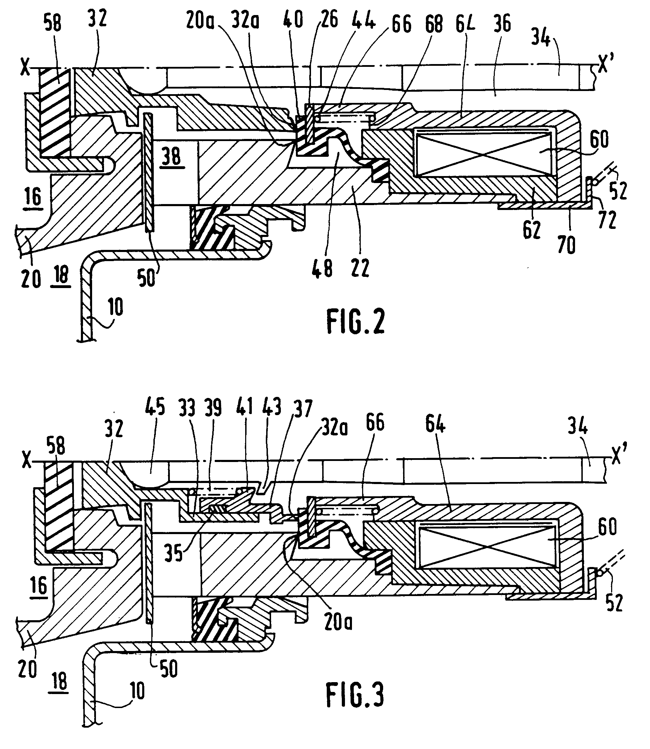

Conformément à l'invention, lorsque l'on désire intégrer à un servomoteur tel qu'il vient d'être décrit des fonctions supplémentaires telles que une aide au démarrage en côte ou un dispositif d'antivol du véhicule, on prévoit des moyens d'actionnement pour solliciter la partie active 40 du clapet vers l'avant, pour qu'elle coopère simultanément avec les premier et second sièges de valve. Un premier mode de réalisation de ces moyens d'actionnement est représenté à la Figure 2.

On voit sur la Figure 2 que la partie tubulaire arrière 22 du piston 20 est équipée d'un bobinage d'électro-aimant 60 d'axe XX' disposé à l'intérieur d'une carcasse 62 en matériau ferromagnétique assurant la circulation du flux magnétique. En variante, on pourrait bien entendu prévoir de réaliser la partie tubulaire 22 en matériau ferromagnétique et ainsi supprimer le recours à une carcasse spécifique. Une armature mobile 64 également en matériau ferromagnétique est disposée à l'intérieur du bobinage 60. L'armature 64 est tubulaire et est prolongée vers l'avant par une partie tubulaire 66 de diamètre inférieur à celui de l'armature 64 de façon à ménager un épaulement radial 68 entre ces deux parties.

Le ressort 44 de clapet est ainsi disposé entre l'insert 26 et l'épaulement radial 68 de l'armature 64, dont le mouvement vers l'arrière est limité, par exemple au moyen d'une bride 70 fixée à l'extérieur de la partie arrière tubulaire 22 du piston, et/ou à la carcasse 62 si on a choisi d'en disposer une. La bride 70 comporte une partie 72 en forme de disque s'étendant radialement vers l'axe X-X', définissant la position arrière de l'armature 64, et pouvant avantageusement fournir un appui pour le ressort 52 de rappel de la tige de commande 34. Cette bride 70 est clairement en matériau amagnétique.

Le fonctionnement du servomoteur réalisé conformément à l'invention se comprend aisément des explications qui précèdent.

Lorsque le servomoteur est au repos et que le bobinage 60 n'est parcouru par aucun courant, l'armature 64 est sollicitée vers l'arrière par le ressort 44 en appui sur le disque 72, le ressort 44 sollicitant la partie active 40 du clapet vers l'avant. L'enfoncement de la pédale de frein provoque alors les phases de fonctionnement qui ont été décrites plus haut, et la sensation de freinage et identique, pour le conducteur du véhicule, à celle qui est fournie par un servomoteur classique.

Par contre, le servomoteur réalisé conformément à l'invention permet très facilement de lui ajouter d'autres fonctions. C'est le cas si le véhicule est équipé de capteurs pour détecter une situation dans laquelle le véhicule est immobile dans une côte : le capteur de vitesse équipe déjà tous les véhicules, et le capteur de pente peut être réalisé très simplement sous forme d'un inclinomètre à bille ou à goutte de mercure. Le fonctionnement est alors le suivant : si la situation d'arrêt en côte est détectée, l'électro-aimant 60 est alors excité, ce qui a pour effet de faire avancer l'armature 64 pour venir en butée contre la carcasse 62. Dans ce mouvement, la partie tubulaire avant 66 de l'armature 64 vient au contact de l'insert 26 et déplace vers l'avant la partie active du clapet 40. Celle-ci, qui était déjà en contact avec le siège de valve 32a du plongeur, va à son tour déplacer vers l'avant le plongeur 32 jusqu'à ce qu'elle vienne elle-même en contact avec le siège de valve 20a formé sur le piston.

C'est la situation représentée sur la Figure 2, où le servomoteur se retrouve dans la position de fin de première phase d'actionnement décrite plus haut : les chambres avant 16 et arrière 18 sont isolées l'une de l'autre, la chambre arrière étant de plus isolée de l'atmosphère.

Le servomoteur se retrouve donc figé dans la configuration de pressions qu'il occupait juste avant l'excitation de l'électro-aimant 60: si le servomoteur était au repos, la chambre arrière était soumise à la même pression que la chambre avant, le piston 20 et la jupe 14 étant dans leur position arrière de repos. Si le conducteur avait appuyé préalablement sur la pédale de frein, le servomoteur était passé dans la seconde phase d'actionnement et la pression dans la chambre arrière était supérieure à la pression dans la chambre avant, le piston 20 et la jupe 14 s'étant déplacés vers l'avant pour actionner la tige de poussée 56 et le maître-cylindre associé au servomoteur.

Dans ces deux situations (pressions égales ou différentes dans les chambres avant et arrière), l'excitation de l'électro-aimant 60 a pour effet d'isoler, indépendamment de la volonté du conducteur, les chambres avant et arrière pour conserver le servomoteur dans sa position de repos ou de freinage. Dans chacune de ces situations, si le conducteur appuie sur la pédale de frein, cette action a pour effet d'éloigner le siège de valve 32a du clapet 40 pour créer ou augmenter la différence de pressions entre les chambres avant et arrière, de la même façon que dans la deuxième phase d'actionnement d'un servomoteur classique.

Par contre, après la détection de situation d'immobilisation en côte, et actionnement de l'électro-aimant 60, lorsque le conducteur du véhicule relâche son effort sur la pédale de frein, la tige de commande 34 ramène vers l'arrière le plongeur 32 sous l'effet du ressort 52. Le siège de valve 32a vient au contact du clapet 40, qui est à ce moment sollicité vers l'avant par la partie tubulaire 66 de l'armature 64, et qui ne peut donc quitter le siège de valve 20a. Il s'ensuit donc que les pressions dans les chambres avant et arrière ne peuvent plus s'équilibrer, et qu'une force d'assistance continue d'exister, bien qu'il n'y ait plus de force d'entrée appliquée sur la tige de commande 34. Cette force d'assistance est transmise par la tige de poussée 56 au maître-cylindre qui continue donc de générer une pression hydraulique transmise aux moteurs de freins du véhicule.

Le véhicule se trouve alors retenu sans intervention du conducteur sur les dispositifs de freinage de service ou de secours. Le conducteur n'est donc plus préoccupé par la retenue de son véhicule dans une côte, et peut porter toute son attention à d'autres tâches, et principalement au redémarrage de son véhicule. Il va sans dire que des seconds capteurs sont disposés sur le véhicule pour détecter une telle intention du conducteur afin de désexciter l'électro-aimant 60 et ainsi faire chuter la pression dans les moteurs de frein. De tels capteurs peuvent être réalisés simplement pour détecter le mouvement de la pédale d'accélérateur et/ou de la pédale d'embrayage et/ou du levier de vitesse.

On a donc bien réalisé conformément à l'invention un servomoteur pneumatique d'assistance au freinage qui intègre la fonction supplémentaire de retenue automatique en côte pour une aide au démarrage dans cette situation. On conçoit que le servomoteur de l'invention peut également intégrer le fonction d'antivol du véhicule.

En effet, lorsque des capteurs détectent que le véhicule est occupé par un conducteur non autorisé, l'électro-aimant 60 est excité tandis que les seconds capteurs sont inhibés. De la sorte, ainsi qu'on l'a expliqué plus haut, dès que le conducteur non autorisé aura effectué un freinage, le véhicule se trouvera immobilisé, la pression hydraulique dans les moteurs de freins ne pouvant que croître puisque la pression pneumatique dans la chambre arrière du servomoteur ne peut elle aussi que croître, toute communication avec la chambre avant étant impossible.

Bien entendu, le mode de fonctionnement de l `électro-aimant 60 peut être inversé, de façon à ce que sa position de repos soit celle qui est représentée sur la Figure 2, un ressort de compression étant par exemple prévu entre la face avant du disque 72 et la face arrière de l'armature 64, pour solliciter au repos la partie active 40 du clapet vers l'avant, tandis que l'excitation de l'électro-aimant 60 provoque le mouvement vers l `arrière de l' armature mobile 64 pour rendre au servomoteur un fonctionnement classique. Un tel mode de fonctionnement de l'électro-aimant 60 permet au servomoteur d'assurer sa fonction d'antivol du véhicule même si l'alimentation de l'électro-aimant 60 est interrompue.

On a donc bien réalisé conformément à l'invention un servomoteur pneumatique d'assistance au freinage pouvant également fournir une retenue automatique en côte pour une aide au démarrage et un anti vol de véhicule. Une telle réalisation est particulièrement simple et peu onéreuse puisque seule la partie arrière de la partie tubulaire 22 du piston 20 a été légèrement modifiée par rapport à un servomoteur classique, tous les autres composants étant inchangés. Il en résulte ainsi que toutes les caractéristiques fonctionnelles du servomoteur telles que la course morte, le temps de réponse et le saut sont déterminés et ajustés de façon identique à celles d'un servomoteur classique.

On a vu que l'excitation de l'électro-aimant 60 a pour effet de solliciter vers l'avant la partie active du clapet 40 en coopération simultanée avec les sièges de valve formés sur le plongeur et sur le piston. Pour ce faire, l'armature 64 déplace le clapet et le plongeur vers l'avant jusqu'à la venue en contact du clapet avec le siège de valve formé sur le piston. Le déplacement du plongeur entraîne le déplacement de la tige de commande 34 et de la pédale de frein qui lui est associée, à l'encontre de l'action du ressort 52. Il s'ensuit que l'électro-aimant doit vaincre l'inertie de l'ensemble plongeur - tige de commande - pédale ainsi que la précontrainte du ressort 52, et que le fonctionnement de l'ensemble peut être jugé trop lent pour certains véhicules de haut de gamme, ou que la consommation de l'électro-aimant 60 peut être jugée excessive sur d'autres véhicules de bas de gamme.

On a représenté sur la Figure 3 une variante du mode de réalisation de la Figure 2, qui apporte une solution dans ces deux cas. Par rapport au servomoteur de la Figure 2, seuls le plongeur 32 et la tige de commande 34 ont été légèrement modifiés.

La partie arrière du plongeur 32 est formé avec un alésage étagé 33 dans lequel coulisse de façon étanche grâce à un joint d'étanchéité 35 une pièce tubulaire 37. L'extrémité arrière de la pièce 37 forme le siège de valve 32a du plongeur, et un ressort de compression 39 est disposé entre deux épaulements radiaux formés l'un dans l'alésage étagé du plongeur 32, et l'autre à l'avant d'une partie en saillie 41 s'étendant radialement vers l'axe X-X' de la pièce 37.

La tige de commande 34 est formée avec une partie en saillie 43 s'étendant radialement vers l'extérieur, et dont la face avant a un profil sphérique concave dont le centre est situé au centre de rotation de la partie 45 de la tige 34 rotulant dans le plongeur 32. La partie en saillie 41 de la pièce 37 a une face arrière dont le profil est sphérique convexe de même rayon de courbure que la face avant de la partie en saillie 43.

Avec un tel agencement, lorsque l'armature 64 est dans sa position arrière, la pièce 37 est normalement en butée par sa partie 41 sur la partie 43 de la tige de commande 34. Les deux parties 41 et 43 ayant des profils complémentaires permettent à la tige 34 de rotuler dans le plongeur 32, tout en conservant une distance fixe prédéterminée entre la face avant du plongeur 32, coopérant avec le disque de réaction 58, et le siège de valve 32a.

Lorsque l'armature 64 est en position arrière, le servomoteur a donc un fonctionnement tout à fait classique ainsi qu'on l'a expliqué plus haut, l'actionnement de la tige de commande 34 faisant se déplacer l'ensemble plongeur 32 - pièce 37 comme un ensemble rigide.

Par contre, pour déplacer l'armature 64 pour qu'elle occupe sa position avant afin de mettre la partie active du clapet 40 en contact simultané avec les sièges de valve 32a et 20a, il suffit de vaincre uniquement la précontrainte du ressort 39. Ainsi qu'on l'a représenté sur la Figure 3, où l'armature 64 est dans sa position avant, le plongeur 32 est resté en appui sur l'organe de butée 50 sous la sollicitation du ressort 52 agissant sur la tige de commande34, alors que le clapet 40 est en contact simultané avec les sièges de valve 32a et 20a.

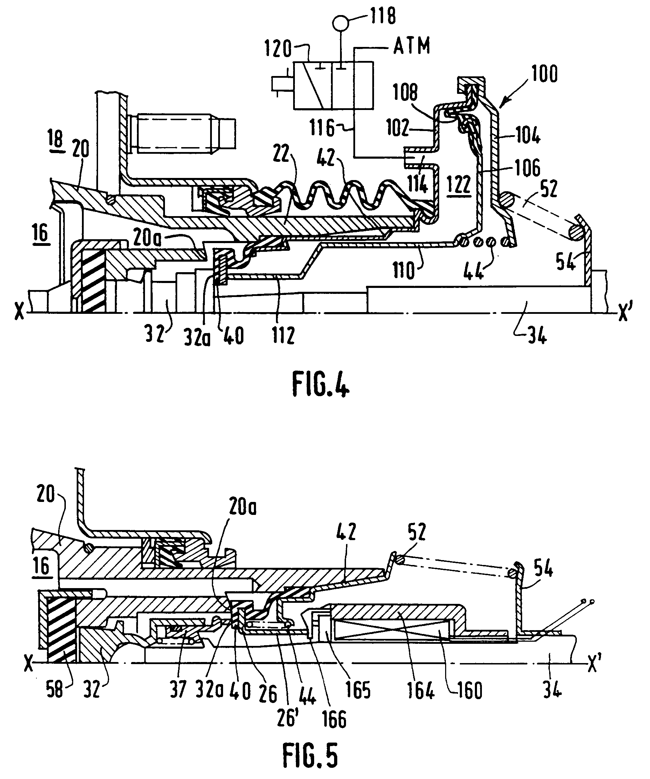

On a représenté sur la Figure 4 un second mode de réalisation de l'invention, où l'électro-aimant du mode de réalisation précédent a été remplacé par un actionneur pneumatique.

On voit sur cette Figure que la partie tubulaire arrière 22 du piston 20 est formée avec un compartiment annulaire 100 formé d'une paroi avant 102 et d'une paroi arrière 104, par exemple sertie sur la paroi avant 102. La paroi avant 102 peut par exemple être réalisée d'une seule pièce avec la coupelle métallique 42. A l'intérieur du compartiment 100 est disposée une cloison mobile 106, adhérisée à sa périphérie extérieure à une membrane 108 reçue de façon étanche entre les parois 102 et 104. Le bord périphérique intérieur de la cloison 106 est prolongé vers l'avant par une partie cylindrique 110 coulissant dans la coupelle métallique 42 et terminé par une partie tubulaire 112 jouant un rôle identique à la partie tubulaire 66 du mode de réalisation précédent.

La paroi avant 102 du compartiment 100 est muni d'une ouverture 114 dans laquelle débouche une canalisation 116, qui est reliée sélectivement à l'atmosphère ATM ou à une source de dépression 118 par une électrovalve à trois voies et deux positions 120. La source de dépression peut avantageusement être constituée de la source à dépression reliée en permanence à la chambre avant du servomoteur. Le ressort de clapet 44 est disposé entre la cloison mobile 106 et la paroi arrière 104, entre lesquelles la pression atmosphérique est toujours présente.

On comprend donc aisément qu'en reliant l'espace 122 situé entre la cloison mobile 106 et la paroi avant 102 sélectivement à l'atmosphère ou à la source de dépression 118 sous l'effet de la commande de l'électrovalve 120, on créera ou annihilera une différence de pressions sur la cloison mobile 106 qui fera prendre à la partie tubulaire 112 l'une ou l'autre des deux positions décrites précédemment pour la partie tubulaire 66.

Bien entendu, on pourra utiliser avec le mode de réalisation de la Figure 4 un plongeur tel que décrit dans le mode de réalisation de la Figure 3, c'est-à-dire en deux parties 32 et 37 sollicitées en écartement par le ressort 39, des parties en saillies 41 et 43 étant prévues sur la partie sur la partie 37 et la tige de commande 34.

La Figure 5 illustre un troisième mode de réalisation de l'invention où les moyens d'actionnement du clapet 40 sont portés par la tige de commande 34, et non plus par le piston 20 comme précédemment.

On voit sur cette Figure qu'un bobinage 160 est disposé autour de la tige de commande 34, qui pourra avantageusement être réalisée en matériau ferromagnétique pour faciliter la circulation du flux magnétique. Une armature mobile 164 en matériau ferromagnétique est disposée autour du bobinage 160. Une rondelle 165 également en matériau ferromagnétique est solidaire de la tige de commande 34 pour fermer le circuit magnétique. La tige de commande 34 associée à la rondelle 165, forme ainsi la carcasse de l'électro-aimant 160.

L'armature 164 est solidaire d'une pièce 166 s'étendant vers l'avant et entourant la rondelle 165. Comme dans les modes de réalisation précédents, lorsque l'armature 164 occupe sa position avant, elle sollicite par l'intermédiaire de la pièce 166 le clapet 40 en coopération simultanée avec les deux sièges de valve 20a et 32a, l'insert 26 étant par exemple prolongé vers l'arrière par une partie tubulaire 26' sur laquelle vient prendre appui la pièce 166. Selon ce mode de réalisation, le plongeur 32 doit être formé en deux parties 32 et 37 comme dans le mode de réalisation de la Figure 3.

La présente invention n'est pas limitée aux modes de réalisation qui ont été décrits, mais est susceptible de recevoir de nombreuses modifications qui apparaîtront à l'homme du métier, dans les limites fixées par les revendications. C'est ainsi que les actionneurs électro-magnétique ou pneumatique qui ont été décrits pourront être remplacés par tout autre type d'actionneur, par exemple mécanique ou hydraulique.

## Revendications

1. Servomoteur pneumatique d'assistance au freinage de véhicule automobile, comportant une enveloppe (10) à l'intérieur de laquelle un piston (20) formé d'une partie tubulaire arrière (22) supportant une jupe (14) définit à l'aide d'une membrane déroulante (12) une chambre avant (16) reliée en permanence à une source de dépression et une chambre arrière (18) reliée sélectivement à la chambre avant (16) ou à l'atmosphère par un moyen de valve (40) actionné par une tige de commande (34) susceptible de s'appuyer, par l'intermédiaire d'un plongeur(32), sur l'une des faces d'un disque de réaction (58) solidaire d'une tige de poussée (56), le moyen de valve comportant un clapet coopérant par une partie active (40) avec un premier siège de valve (32a) formé sur le plongeur (32) et un second siège de valve (20a) formé sur le piston (20), le clapet (40) étant normalement sollicité vers l'avant par un moyen élastique (44), caractérisé en ce que des moyens d'actionnement (60, 100, 160) sont prévus pour solliciter la partie active du clapet (40) vers l'avant en contact simultané avec les premier (32a) et second (20a) sièges de valve, sans agir directement sur la tige de commande (34).

2. Servomoteur selon la revendication 1, caractérisé en ce que les moyens d'actionnement (60, 100) sont formés sur la partie tubulaire arrière (22) du piston (20).

3. Servomoteur selon la revendication 2, caractérisé en ce que les moyens d'actionnement (60) comportent un bobinage (60) disposé à l'intérieur de la partie tubulaire arrière (22) du piston (20) et une armature mobile (64) disposée à l'intérieur du bobinage (60).

4. Servomoteur selon la revendication 3, caractérisé en ce que l'armature mobile (64) est prolongée vers l'avant par une partie tubulaire (66) et est susceptible de déplacer la partie active du clapet (40) vers l'avant en coopération simultanée avec les premier (32a) et second (20a) sièges de valve.

5. Servomoteur selon la revendication 4, caractérisé en ce que le premier siège de valve (32a) est formé sur une pièce tubulaire (37) coulissant de façon étanche dans un alésage (33) formé dans la partie arrière du plongeur (32), un ressort (39) étant disposé entre le plongeur (32) et la pièce tubulaire (37), et une partie en saillie (41) étant formée sur la pièce tubulaire (37) et venant normalement en butée sur une partie en saillie (43) formée sur la tige de commande (34).

6. Servomoteur selon la revendication 2, caractérisé en ce que les moyens d'actionnement (100) comprennent un compartiment (100) à l'intérieur duquel une cloison mobile (106) est prolongée vers l'avant par son bord périphérique intérieur par une partie cylindrique (110, 112) susceptible de déplacer la partie active du clapet (40) vers l'avant en coopération simultanée avec les premier (32a) et second (20a) sièges de valve, la cloison mobile (106) déterminant dans le compartiment (100) un volume (122) relié sélectivement à l'atmosphère (ATM) ou à une source de dépression (118) par un moyen de commande (120).

7. Servomoteur selon la revendication 6, caractérisé en ce que le premier siège de valve (32a) est formée sur une pièce tubulaire (37) coulissant de façon étanche dans un alésage (33) formé dans la partie arrière du plongeur (32), un ressort (39) étant disposé entre le plongeur (32) et la pièce tubulaire (37), une partie en saillie (41) étant formée sur la pièce tubulaire (37) et venant normalement en butée sur une partie en saillie (43) formée sur la tige de commande (34).

8. Servomoteur selon la revendication 1, caractérisé en ce que les moyens d'actionnement (160) sont portés par la tige de commande (34).

9. Servomoteur selon la revendication 8, caractérisé en ce que les moyens d'actionnement (160) comportent un bobinage (160) disposé autour de la tige de commande (34) et une armature mobile (164) disposée autour du bobinage (160), l'armature (164) étant solidaire d'une pièce (166) s'étendant vers l'avant susceptible de déplacer la partie active du clapet (40) vers l'avant en coopération simultanée avec les premier (32a) et second (20a) sièges de valve, le premier siège de valve (32a) étant formé sur une pièce tubulaire (37) coulissant de façon étanche dans un alésage (33) formé dans la partie arrière du plongeur (32), un ressort (39) étant disposé entre le plongeur (32) et la pièce tubulaire (37), une partie en saillie (41) étant formée sur la pièce tubulaire (37) et venant normalement en butée sur une partie en saillie (43) formée sur la tige de commande (34).

10. Servomoteur selon la revendication 9, caractérisé en ce que la tige de commande (34) est en matériau ferromagnétique.

## Claims

1. Motor vehicle pneumatic brake booster, comprising a casing (10) inside which a piston (20) formed from a rear tubular part (22) supporting a skirt (14) defines, with the aid of an unrolling membrane (12), a front chamber (16), permanently connected to a vacuum source, and a back chamber (18) alternately connected to the front chamber (16) or to the atmosphere via a valve means (40) actuated by a control rod (34) capable of bearing, by means of a plunger (32), on one of the faces of a reaction disk (58) securely fastened to a thrust rod (56), the valve means comprising a valve element interacting via an active part (40) with a first valve seat (32a) formed on the plunger (32) and a second valve seat (20a) formed on the piston (20), the valve element (40) normally being urged forward by an elastic means (44), characterized in that actuation means (60, 100, 160) are provided in order to urge the active part of the valve element (40) forward in simultaneous contact with the first (32a) and second (20a) valve seats, without acting directly on the control rod (34).

2. Booster according to Claim 1, characterized in that the actuation means (60, 100) are formed on the rear tubular part (22) of the piston (20).

3. Booster according to Claim 2, characterized in that the actuation means (60) comprise a winding (60) located inside the rear tubular part (22) of the piston (20), and a movable armature (64) located inside the winding (60).

4. Booster according to Claim 3, characterized in that the movable armature (64) is extended forward by a tubular part (66) and is capable of moving the active part of the valve element (40) forward in simultaneous interaction with the first (32a) and second (20a) valve seats.

5. Booster according to Claim 4, characterized in that the first valve seat (32a) is formed on a tubular component (37) sliding in leaktight fashion in a bore (33) formed in the rear part of the plunger (32), a spring (39) being located between the plunger (32) and the tubular component (37), and a projecting part (41) being formed on the tubular component (37) and usually coming into abutment on a projecting part (43) formed on the control rod (34).

6. Booster according to Claim 2, characterized in that the actuation means (100) comprise a compartment (100) inside which a moving partition (106) is extended forward by its internal peripheral edge by a cylindrical part (110, 112) capable of moving the active part of the valve element (40) forward in simultaneous interaction with the first (32a) and second (20a) valve seats, the movable partition (106) determining, within the compartment (100), a volume (122) alternately connected to atmosphere (ATM) or to a vacuum source (118) via a control means (120).

7. Booster according to Claim 6, characterized in that the first valve seat (32a) is formed on a tubular component (37) sliding in leaktight fashion in a bore (33) formed in the roar part of the plunger (32), a spring (39) being located between the plunger (32) and the tubular component (37), a projecting part (41) being formed on the tubular component (37) and usually coming into abutment on a projecting part (43) formed on the control rod (34).

8. Booster according to Claim 1, characterized in that the actuation means (160) are carried by the control rod (34).

9. Booster according to Claim 8, characterized in that the actuation means (160) comprise a winding (160) located around the control rod (34) and a movable armature (164) located around the winding (160), the armature (164) being securely fastened to a component (166) extending forward and capable of moving the active part of the valve element (40) forward in simultaneous interaction with the first (32a) and second (20a) valve seats, the first valve seat (32a) being formed on a tubular component (37) sliding in leaktight fashion in a bore (33) formed in the rear part of the plunger (32), a spring (39) being located between the plunger (32) and the tubular component (37), a projecting part (41) being formed on the tubular component (37) and usually coming into abutment on a projecting part (43) formed on the control rod (34).

10. Booster according to Claim 9, characterized in that the control rod (34) is made from a ferromagnetic material.

## Patentansprüche

1. Pneumatischer Servomotor zur Bremsunterstützung von Kraftfahrzeugen, mit einem Gehäuse (10), in dessen Innerem ein Kolben (20), der durch einen eine Schürze (14) tragenden rohrförmigen hinteren Abschnitt (22) gebildet ist, mittels einer Abrollmembran (12) eine permanent mit einer Unterdruckquelle verbundene vordere Kammer (16) und eine hintere Kammer (18) abgrenzt, die selektiv mit der vorderen Kammer (16) oder der Atmosphäre über ein Ventilmittel (40) verbunden ist, das von einer Steuerstange (34) betätigt wird, die sich über einen Tauchkolben (32) an einer der Seiten einer Reaktionsscheibe (58) abstützen kann, die fest mit einer Schubstange (58) verbunden ist, wobei das Ventilmittel ein Ventilelement aufweist, das über einen aktiven Abschnitt (40) mit einem an dem Tauchkolben (32) gebildeten ersten Ventilsitz (32a) und einem an dem Kolben (20) gebildeten zweiten Ventilsitz (20a) zusammenwirkt, wobei das Ventilelement (40) normalerweise von einem elastischen Mittel (44) nach vorne beaufschlagt ist, dadurch gekennzeichnet, daß Betätigungsmittel (60, 100, 160) vorgesehen sind, um den aktiven Abschnitt des Ventilelementes (40) in gleichzeitigen Kontakt mit dem ersten Ventilsitz (32a) und dem zweiten Ventilsitz (20a) nach vorne zu beaufschlagen, ohne direkt auf die Steuerstange (34) einzuwirken.

2. Servomotor nach Anspruch 1, dadurch gekennzeichnet, daß die Betätigungsmittel (60, 100) an dem rohrförmigen hinteren Abschnitt (22) des Kolbens (20) gebildet sind.

3. Servomotor nach Anspruch 2, dadurch gekennzeichnet, daß die Betätigungsmittel (60) eine Spule (60) aufweisen, die im Inneren des rohrförmigen hinteren Abschnittes (22) des Kolbens (20) angeordnet ist, sowie einen beweglichen Anker (64), der im Inneren der Spule (60) angeordnet ist.

4. Servomotor nach Anspruch 3, dadurch gekennzeichnet, daß der bewegliche Anker (64) durch einen rohrförmigen Abschnitt (66) nach vorne verlängert ist und den aktiven Abschnitt des Ventilelementes (40) in ein gleichzeitiges Zusammenwirken mit dem ersten Ventilsitz (32a) und dem zweiten Ventilsitz (20a) nach vorne bewegen kann.

5. Servomotor nach Anspruch 4, dadurch gekennzeichnet, daß der erste Ventilsitz (32a) an einem rohrförmigen Teil (37) gebildet ist, das in dichter Weise in einer in dem hinteren Abschnitt des Tauchkolbens (32) gebildeten Bohrung (33) gleitet, wobei zwischen dem Tauchkolben (32) und dem rohrförmigen Teil (37) eine Feder (39) angeordnet ist und wobei an dem rohrförmigen Teil (37) ein hervorstehender Abschnitt (41) gebildet ist, der normalerweise an einem an der Steuerstange (34) gebildeten hervorstehenden Abschnitt (43) in Anlage gelangt.

6. Servomotor nach Anspruch 2, dadurch gekennzeichnet, daß die Betätigungsmittel (100) einen Raum (100) aufweisen, in dessen Innerem eine bewegbare Trennwand (106) durch ihren Innenumfangsrand mittels eines zylindrischen Abschnittes (110, 112) nach vorne verlängert ist, der den aktiven Abschnitt des Ventilelementes (40) in ein gleichzeitiges Zusammenwirken mit dem ersten Ventilsitz (32a) und dem zweiten Ventilsitz (20a) nach vorne bewegen kann, wobei die bewegbare Trennwand (106) in dem Raum (100) ein Volumen (122) abgrenzt, das über ein Steuermittel (120) selektiv mit der Atmosphäre (ATM) oder einer Unterdruckquelle (118) verbunden ist.

7. Servomotor nach Anspruch 6, dadurch gekennzeichnet, daß der erste Ventilsitz (32a) an einem rohrförmigen Teil (37) gebildet ist, das in dichter Weise in einer in dem hinteren Abschnitt des Tauchkolbens (32) gebildeten Bohrung (33) gleitet, wobei zwischen dem Tauchkolben (32) und dem rohrförmigen Teil (37) eine Feder (39) angeordnet ist, wobei an dem rohrförmigen Teil (37) ein hervorstehender Abschnitt (41) gebildet ist, der normalerweise an einem an der Steuerstange (34) gebildeten hervorstehenden Abschnitt (43) in Anlage gelangt.

8. Servomotor nach Anspruch 1, dadurch gekennzeichnet, daß die Betätigungsmittel (160) von der Steuerstange (34) getragen werden.

9. Servomotor nach Anspruch 8, dadurch gekennzeichnet, daß die Betätigungsmittel (160) eine Spule (160) aufweisen, die um die Steuerstange (34) herum angeordnet ist, und einen beweglichen Anker (164), der um die Spule (160) herum angeordnet ist, wobei der Anker (164) fest mit einem sich nach vorne erstreckenden Teil (166) verbunden ist, das den aktiven Abschnitt des Ventilelementes (40) in ein gleichzeitiges Zusammenwirken mit dem ersten Ventilsitz (32a) und dem zweiten Ventilsitz (20a) nach vorne bewegen kann, wobei der erste Ventilsitz (32a) an einem rohrförmigen Teil (37) gebildet ist, das in dichter Weise in einer in dem hinteren Abschnitt des Tauchkolbens (32) gebildeten Bohrung (33) gleitet, wobei zwischen dem Tauchkolben (32) und dem rohrförmigen Teil (37) eine Feder (39) angeordnet ist, wobei an dem rohrförmigen Teil (37) ein hervorstehender Abschnitt (41) gebildet ist, der normalerweise an einem an der Steuerstange (34) gebildeten hervorstehenden Abschnitt (43) in Anlage gelangt.

10. Servomotor nach Anspruch 9, dadurch gekennzeichnet, daß die Steuerstange (34) aus ferromagnetischem Material besteht.
